# EUROPÄISCHE PATENTSCHRIFT

(11) **EP 0 582 611 B1**
(45) Veröffentlichungstag und Bekanntmachung des Hinweises auf die Patenterteilung: **28.06.1995**
(21) Anmeldenummer: 92909197.3
(22) Anmeldetag: 30.04.1992
(51) Int. Cl.: C08J 3/03, C04B 41/49, C08L 83/04

(54) **ORGANOPOLYSILOXAN-ALKYLTRIALKOXYSILANEMULSIONEN ZUR IMPRÄGNIERUNG VON ZEMENTGEBUNDENEN FASERBAUTEILEN**
EMULSIONS OF ORGANOPOLYSILOXANE AND ALKYLTRIALKOXYSILANE FOR IMPREGNATING CEMENT-BONDED FIBROUS BUILDING COMPONENTS
EMULSIONS D'ORGANOPOLYSILOXANE-ALKYLTRIALCOXYSILANE POUR IMPREGNATION D'ELEMENTS FIBREUX DE CONSTRUCTION LIES AVEC UN CIMENT

(30) Priorität: 03.05.1991 DE 4114498
(43) Veröffentlichungstag der Anmeldung: 16.02.1994
(73) Patentinhaber: WACKER-CHEMIE GMBH, D-81737 München (DE)
(72) Erfinder: GERHARDINGER, Dieter, D-8263 Burghausen (DE); VON AU, Günter, D-8263 Burghausen (DE)
(86) Internationale Anmeldenummer: EP9200948
(87) Internationale Veröffentlichungsnummer: WO9219671

(56) Entgegenhaltungen:
- EP-A- 0 124 748
- EP-A- 0 366 133
- EP-A- 0 392 253
- US-A- 4 877 654

## Beschreibung

Die vorliegende Erfindung betrifft die Verwendung wässriger Emulsionen von Alkoxygruppen enthaltendem stickstofffreien Organopolysiloxan und Alkyltrialkoxysilan zur Imprägnierung von zementgebundenen Zellulosefaserbauteilen.

Wässrige Emulsionen von Alkyltrialkoxysilanen und stickstofffreien und basischen Stickstoff enthaltenden Organopolysiloxanen mit Alkoxygruppen sind aus US-A-4 661 551 (ausgegeben am 28. 4. 1987, H. Mayer et al., Wacker-Chemie GmbH) bekannt. Diese Emulsionen eignen sich gut zum Hydrophobieren von Baustoffen, einschließlich Beton und zementgebundenen Faserbauteilen. Jedoch vergilben die damit behandelten Baustoffe unter dem Einfluß von Licht und Luft.

Wässrige Emulsionen von Alkyltrialkoxysilanen zum Hydrophobieren von Baustoffen sind u.a. aus US-A-4 877 654 (ausgegeben am 31. 10. 1989, M.E. Wilson, PCR Inc.) bekannt. Die Alkyltrialkoxysilane sind jedoch relativ teuer.
Die Verwendung von preisgünstigeren Emulsionen von Alkoxygruppen enthaltenden Organopolysiloxanen zum Hydrophobieren von Baustoffen ist in US-A-4 704 416 (ausgegeben am 3. 5. 1988, H. Eck und H. Roth, Wacker-Chemie GmbH) beschrieben. Die hydrophobierende Wirkung solcher Organopolysiloxane ist jedoch unbefriedigend.

Es ist Aufgabe der vorliegenden Erfindung, preisgünstige wässrige Emulsionen zur wasserabweisenden Imprägnierung von zementgebundenen Faserbauteilen bereitzustellen, die durch den Einfluß von Licht und Luft nicht vergilben und die eine gute imprägnierende Wirkung Zeigen, ohne einen Glanz an der Oberfläche der Baustoffe zu verursachen.

Die vorstehend beschriebene Aufgabe wird durch die vorliegende Erfindung gelöst durch die Verwendung von wässrigen Emulsionen von (A) Organopolysiloxan, das frei von basischem Stickstoff ist und (B) Alkyltrialkoxysilan, die (C) einen Emulgator und (D) Wasser enthalten, wobei das Organopolysiloxan (A) die Formel 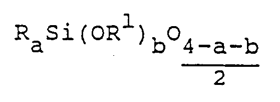
hat, in der R gleiche oder verschiedene einwertige, gegebenenfalls substituierte über SiC-gebundene C₁-C₁₈-Kohlenwasserstoffreste, R¹ gleiche oder verschiedene einwertige C₁-C₆-Kohlenwasserstoffreste, a 0, 1, 2 oder 3, durchschnittlich 0,75 bis 1,5 und b 1, 2 oder 3, durchschnittlich 0,2 bis 2,0 bedeutet und ein Molekulargewicht von mindestens 600g/mol besitzt, zur Imprägnierung von zementgebundenen Zellulosefaserbauteilen.

Obwohl in der oben aufgeführten Formel nicht aufgeführt, kann ein Teil der Reste R durch direkt an Siliciumatome gebundene Wasserstoffatome ersetzt sein. Dies ist jedoch nicht bevorzugt.

Vorzugsweise enthalten die Reste R höchstens 12 Kohlenstoffatome je Rest. Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β- Phenylethylrest.

Beispiele für substituierte Reste R sind Cyanalkylreste, wie der β-Cyanethylrest, und halogenierte Kohlenwasserstoffreste, beispielsweise Halogenalkylreste, wie der 3,-3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Wegen der leichteren Zugänglichkeit sind vorzugsweise mindestens 50 % der Reste R, insbesondere mindestens 80 % der Reste R Methylreste.

In der vorstehenden Formel bedeutet a vorzugsweise durchschnittlich 0,9 bis 1,1 und b vorzugsweise 0,8 bis 1,4, insbesondere 1,0 bis 1,2.

Es kann ein Organopolysiloxan, vorzugsweise eines der vorstehenden Formel eingesetzt werden, es können auch mehrere Organopolysiloxane eingesetzt werden.

Besonders bevorzugt als Organopolysiloxane (A) sind solche, die durch Umsetzung von Methyltrichlorsilan oder Phenyltrichlorsilan mit Ethanol in Wasser erhältlich sind, z.B. solche der Summenformel

CH₃Si(OC₂H₅)_{O,8}O_{1,1}

oder

C₆H₅Si(OC₂H₅)_{0,72}O_{1,14}

Vorzugsweise haben die Organopolysiloxane (A) und damit auch die Organopolysiloxane der Formel (I) eine Viskosität von 15 bis 2000 mPa.s bei 25°C, insbesondere 20 bis 200 mPa.s bei 25° C.

Das Alkyltrialkoxysilan (B) besitzt gleiche oder verschiedene einwertige gegebenenfalls substituierte über SiC-gebundene C₂-C₁₅-Alkylreste und vorzugsweise gleiche oder verschiedene gegebenenfalls substituierte C₁-C₆-Alkoxyreste.

Bevorzugte Alkylreste besitzen 4 bis 10 Kohlenstoffatome, wie der n-Butyl-, sec.-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl- und Cycloheptylreste und Methylcyclohexylreste.

Die substituierten Alkylreste sind Cyanalkylreste, wie der β-Cyanethylrest, und Halogenalkylreste, wie der 3,3,3-Trifluor-n-propylrest, der 2,2,2,2',2',2'-Hexafluorisopropylrest und der Heptafluorisopropylrest.

Bevorzugte Alkoxyreste des Alkyltrialkoxysilans besitzen 1 bis 4 Kohlenstoffatome, wie der Methoxy-, Ethoxy-, n-Propoxy-, Isopropoxy-, n-Butoxy-, iso-Butoxy-, sec.-Butoxy-, und tert.-Butoxyrest, wobei die Methoxy- und Ethoxyreste besonders bevorzugt sind.

Die Alkoxyreste des Alkyltrialkoxysilans können mit Cyanogruppen und Halogenatomen substituiert sein. Es kann ein Alkyltrialkoxysilan, es können auch Gemische aus mehreren Alkyltrialkoxysilanen verwendet werden.

Die wässrigen Emulsionen enthalten einen an sich bekannten Emulgator.

Als anionische Emulgatoren eignen sich besonders:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2.Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese können diese Alkohole oder Alkylphenole auch mit 1 bis 40 EO-Einheiten ethoxyliert sein.
3. Alkali- und Ammoniumsalze von Carbonsäuren mit 8 bis 20 C-atomen im Alkyl-, Aryl-, Alkaryl- oder Aralkylrest.
4. Phosphorsäureteilester und deren Alkali- und Ammoniumsalze, besonders alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
   Als nichtionische Emulgatoren eignen sich besonders:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Fettsäuren mit 6 bis 24 C-Atomen.
10. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.
11. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
   Als kationische Emulgatoren eignen sich besonders:
12. Salze von primären, sekundären und tertiären Fettaminen mit 8 bis 24 C-Atomen mit Essigsäure, Schwefelsäure, Salzsäure und Phosphorsäuren.
13. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.
14. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
   Als Ampholytische Emulgatoren eignen sich besonders:
15. Langkettig substituierte Aminosäuren, wie N-Alkyl-di(aminoethyl-)glycin oder N-Alkyl-2-aminopropionsäuresalze.
16. Betaine, wie N-(3-Acylamidopropyl)-N:N-dimethylammoniumsalze mit einem C₈-C₁₈-Acylrest und Alkyl-imidazolium-Betaine.

Bevorzugt als Emulgatoren sind nichtionische Emulgatoren, insbesondere der vorstehend unter 5. aufgeführte Polyvinylalkohol. Besonders bevorzugte Polyvinylalkohole enthalten noch 10 bis 15 % Vinylacetateinheiten und weisen einen Polymerisationsgrad von 1200 bis 2000.

Die wässrigen Emulsionen enthalten 30 bis 95 Gew.-%, vorzugsweise 35 bis 70 Gew.-%, insbesondere 45 bis 60 Gew.-% Wasser.

In den Emulsionen liegt das Gewichtsverhältnis von (A) Organopolysiloxan und (B) Alkyltrialkoxysilan bei 100:1 bis 1:1. Vorzugsweise liegt das Gewichtsverhältnis von (A) Organopolysiloxan zu (B) Alkyltrialkoxysilan bei 24:1 bis 1:1. Besonders bevorzugt ist ein Gewichtsverhältnis von (A) Organopolysiloxan zu (B) Alkyltrialkoxysilan von 10:1 bis 2:1, insbesondere 5:1 bis 3:1.

Der Anteil des Emulgators (C) kann 0,1 bis 15 Gew.-% der Gesamtmenge von (A) Organopolysiloxan und (B) Alkyltrialkoxysilan betragen. Vorzugsweise liegt er bei 2 bis 10 Gew.-%.

Die Emulsionen können zusätzlich übliche Füllstoffe und Verdickungsmittel, insbesondere verstärkende Füllstoffe, also Füllstoffe mit einer BET-Oberfläche von mehr als 50 m²/g, wie pyrogen hergestellte Kieselsäure, gefällte Kieselsäure und Silicium-Aluminium-Mischoxide großer BET-Oberfläche enthalten. Besonders geeignet ist hochdisperse Kieselsäure. Es kann eine Art von Füllstoff, es kann auch ein Gemisch von mindestens zwei Füllstoffen eingesetzt werden.

Die Emulsionen können auch noch Puffersubstanzen enthalten, die den pH-Wert im Bereich von 4 bis 7 stabilisieren, in dem die Alkyltrialkoxysilane sehr hydrolysebeständig sind. Geeignet sind alle organischen und anorganischen Säuren und Basen, die sich gegenüber den übrigen Bestandteilen der Emulsionen chemisch inert verhalten, insbesondere die Alkali-, Erdalkali- und Ammoniumsalze von Carbonsäuren, Phosphor- Kohlen- und Schwefelsäure. Besonders bevorzugt sind Natriumcarbonat, Natriumhydrogencarbonat, Natriumhydrogenphosphat, Natriumacetat und ein Gemisch aus Essigsäure und wässriger Ammoniaklösung. Die bevorzugte Menge an Puffersubstanzen liegt zwischen 0,01 und 4 Gew.-%.

Die Emulsionen können zusätzlich zu den vorstehend beschriebenen Bestandteilen als Zusatzstoffe Fungizide, Bakterizide, Algicide, Mikrobicide, Geruchsstoffe, Korrosionsinhibitoren, Entschäumer und, wenn auch nicht bevorzugt, organische Lösungsmittel enthalten. Die Emulsionen enthalten Zusatzstoffe jeweils vorzugsweise in Mengen von 0,001 bis 1 Gew.-%, insbesondere von 0,01 bis 0,1 Gew.-%.

Die Mengenangaben für Füllstoffe, Verdickungsmittel, Puffersubstanzen und Zusatzstoffe sind jeweils bezogen auf die Summe der Gewichte von (A) Organopolysiloxan, (B) Alkyltrialkoxysilan, (C) Emulgator und (D) Wasser.

Die wässrigen Emulsionen können nach üblichen Verfahren zur Herstellung von wässrigen Emulsionen hergestellt werden. Vorzugsweise wird zunächst nur ein Teil des Wassers mit (A) dem Organopolysiloxan, (B) dem Alkyltrialkoxysilan und (C) dem Emulgator emulgiert, bis eine viskose Ölphase entsteht und anschließend das restliche Wasser zur Bildung einer weniger viskosen Emulsion zuemulgiert. Das Organopolysiloxan kann auch im Alkyltrialkoxysilan gelöst werden, wodurch beide Komponenten gleichzeitig zu der Emulsion aus Emulgator und Wasser gegeben werden.

Das Emulgieren kann in einer Emulgieranlage diskontinuierlich oder vorzugsweise kontinuierlich in einer Durchlaufmischanlage erfolgen.

Die Emulsionen werden vorzugsweise bei 0 bis 50°C, insbesondere bei 20°C und vorzugsweise bei Drucken von 0,5 bis 2 MPa (abs.), insbesondere bei 0,1 MPa (abs.) hergestellt.

Die Zellulosefasern der zementgebundenen Zellulosefaserbauteile können beispielsweise Jute-, Kokos- oder Hanffasern sein oder aus Papier, Karton oder Altpapier stammen.
Die Emulsionen eignen sich für die Anwendung in Masse, d.h. die Emulsion wird der hydraulischen Mischung zur Herstellung von Bauteilen vor dem Abbinden zugesetzt oder für die Imprägnierung von Bauteilen nach dem Abbinden.

Die Emulsionen können vor ihrer Verwendung als Hydrophobierungs- und Imprägnierungsmittel mit Wasser verdünnt werden. Bei der Oberflächenimprägnierung von Baustoffen nach dem Abbinden ist eine Verdünnung bis zu einem Gesamtgehalt von (A) Organopolysiloxan und (B) Alkyltrialkoxysilan von 1 Gew-% günstig.

In den nachfolgenden Beispielen sind, falls jeweils nicht anders angegeben,
a) alle Mengenangaben auf das Gewicht bezogen;
b) alle Drücke 0,1 MPa (abs.);
c) alle Temperaturen 20° C .

### Beispiele

### Herstellung des Organopolysiloxans (A):

Das in den folgenden Beispielen als Organopolysiloxan (A) verwendete Monomethylsiloxan mit über Sauerstoff an Silicium gebundenen Ethylgruppen wurde hergestellt wie folgt:

Ein Gemisch aus 10 Mol Ethanol und 5,5 Mol Wasser wurde aus einem Tropftrichter zu einem Gemisch aus 6 Mol Methyltrichlorsilan und 400 g Toluol unter Rühren tropfenweise gegeben, wobei gasförmiger Chlorwasserstoff entwich und sich der zunächst bei 30°C befindliche Inhalt des Reaktionsgefäßes stark abkühlte. Nach Beendigung der Zugabe des Ethanol-Wassergemisches wurde das Reaktionsgemisch auf 40°C erwärmt und bei 0,20 kPa (abs.) ein Gemisch aus Ethanol, Wasser und Chlorwasserstoff abdestilliert. Restlicher Chlorwasserstoff wurde mit wasserfreiem Natriumcarbonat neutralisiert und anschließend restliches Ethanol und Wasser bei 0,30 kPa (abs.) bis 120°C als Temperatur des flüssigen Kolbeninhalts abdestilliert. Nach Abkühlung und Filtrieren des bei der Destillation erhaltenen Rückstandes wurde eine klare, farblose Flüssigkeit mit einer Viskosität von 20 mPa.s bei 23°C erhalten. Sie hat die Bruttoformel

CH₃Si(OC₂H₅)_{O,8}O_{1,1} .

Dieses Organopolysiloxan hat ein Molekulargewicht von 650 g/mol.

### Beispiel

### Herstellung der erfindungsgemäßen Emulsion:

In einer Turrax Emulgiervorrichtung wurden 20,25 Gewichtsteile Wasser mit 2,25 Gewichtsteilen Polyvinylalkohol mit einem Polymerisationsgrad von etwa 1600 und der noch 11-14% Acetoxyethyleneinheiten aufwies (Polyviol® W 25/140 von Wacker-Chemie, München) bei 1000 U/min emulgiert. Anschließend wurden 38 Gewichtsteile des vorstehend hergestellten Organopolysiloxans (A), 10 Gewichtsteile Isooctyltrimethoxysilan (VP 1316 von Wacker-Chemie GmbH, München), und 2 Gewichtsteile hochdisperse Kieselsäure mit einer BET-Oberfläche von 120 m²/g (Wacker HDK H 15® von Wacker-Chemie GmbH, München) in der angegebenen Reihenfolge bei 15000 U/min emulgiert. Es bildete sich eine viskose Ölphase, die beim anschließendem Emulgieren mit weiteren 27,5 Gewichtsteilen Wasser dünnflüssiger wurde. Die Gesamtzeit für das Emulgieren betrug 10 min. In die erhaltene Emulsion wurden schließlich 0,1 Gewichtsteile einer 20 Gew.%igen Natriumacetatlösung und 0,05 Gewichtsteile eines Fungizids eingerührt.

### Herstellung der nicht erfindungsgemäßen Emulsion:

Auf gleiche Weise wurde eine Emulsion hergestellt, bei der anstatt der 10 Gewichtsteile Isooctyltrimethoxysilan weitere 10 Gewichtsteile des Organopolysiloxans (A) eingesetzt wurden. Diese Emulsion enthielt also 48 Gewichtsteile des Organopolysiloxans (A).

### Anwendungsbeispiel:

### Herstellung der zementgebundenen Faserbauteile als Prüfkörper:

10 Gewichtsteile Papiertücher (von Papierhygiene GmbH, Heidelberg) wurden in einem Reißwolf zerkleinert und mit 56 Gewichtsteilen Wasser versetzt. Die feuchte Papiermasse wurde nach 24 Stunden Lagerung mit einem Dissolver homogenisiert, mit 5 Gewichtsteilen feinkörnigem Quarzsand, 75 Gewichtsteilen Portlandzement 45F, 10 Gewichtsteilen Calciumcarbonat und gegebenenfalls Hydrophobierungsmittel versetzt und erneut intensiv gemischt. Die Faser-Zementmasse wurde anschließend in einer Nutsche mit Wasserstrahlvakuum mit einem Druckstempel über ein Stahlsieb abgepreßt. Der feuchte Preßkuchen mit einem Durchmesser von 9,5 cm und einer Dicke von 1,5 cm wurde zum Abbinden 6 Tage bei 50 % rel. Luftfeuchte gelagert.
Die Menge des zugegebenen Hydrophobierungsmittels wurde berechnet in Gew.-% der Gesamtmenge von Zement, Faser, Sand und Calciumcarbonat. Zugegeben wurden 0, 1 bzw. 5 Gew.-% Hydrophobierungsmittel.

### Als Hydrophobierungsmittel wurden verwendet:

1. Vorstehend beschriebene erfindungsgemäße Emulsion mit 38 Gew.-% Organopolysiloxan und 10 Gew.-% Alkyltrialkoxysilan
2. Vorstehend beschriebene nicht erfindungsgemäße Emulsion mit 48 Gew.-% Organopolysiloxan
3. Kein Hydrophobierungsmittel

Einige Prüfkörper, die ohne Hydrophobierungsmittel hergestellt worden waren, wurden nach Ablauf der Lagerungszeit 5 Minuten in Imprägnierlösung getaucht und anschließend 5 Tage gelagert. Als Imprägnierlösung diente eine Verdünnung der vorstehend beschriebenen Hydrophobierungsmittel mit Wasser im Verhältnis 1:8 bzw. 1:15. Die Oberflächen der Prüfkörper haben ihr mattes Aussehen behalten.

### Druckwasserprüfung nach DIN 18180:

Die Prüfkörper wurden 60 bzw. 120 min. in einem Wasserbad bei Raumtemperatur gelagert. Die Wassersäule über der Prüfkörperoberfläche betrug 50 mm. Die Wasseraufnahme wurde gravimetrisch ermittelt und als Gew.-% berechnet.

Die Ergebnisse der Druckwasserprüfung nach Hydrophobierung durch Zugabe des Hydrophobierungsmittels in Masse sind in Tabelle I aufgeführt.

**Tabelle I**

| **Hydrophobierung durch Zugabe in Masse** | | | |
|---|---|---|---|
| Hydrophobierungsmittel | Menge in Gew.-% | Wasseraufnahme in Gew.-% | |
| | | nach 60 min | nach 120 min |
| 1 | 1 | 4,7 | 5,6 |
| | 5 | 1,4 | 1,9 |
| 2 | 1 | 9,7 | 15,5 |
| | 5 | 1,8 | 2,4 |
| 3 | - | 26,2 | 26,5 |

Die Ergebnisse der Druckwasserprüfung nach Imprägnierung durch Tauchen in eine verdünnte Emulsion als Hydrophobierungsmittel sind in Tabelle II aufgeführt.

**Tabelle II**

| **Imprägnieren durch Tauchen** | | | |
|---|---|---|---|
| Hydrophobierungsmittel | Verdünnung mit Wasser | Wasseraufnahme in Gew.-% | |
| | | nach 60 min | nach 120 min |
| 1 | 1:8 | 1,7 | 1,8 |
| | 1:15 | 1,4 | 2,4 |
| 2 | 1:8 | 1,4 | 2,6 |
| | 1:15 | 1,8 | 3,7 |
| 3 | - | 26,2 | 26,5 |

## Patentansprüche

1. Verwendung einer Wässrigen Emulsion von (A) Organopolysiloxan, das frei von basischem Stickstoff ist und (B) Alkyltrialkoxysilan, die (C) einen Emulgator und (D) Wasser enthält, wobei das Organopolysiloxan (A) die Formel 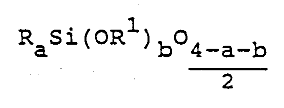 hat, in der R gleiche oder verschiedene einwertige, gegebenenfalls substituierte über SiC-gebundene C₁-C₁₈-Kohlenwasserstoffreste, R¹ gleiche oder verschiedene einwertige C₁-C₆-Kohlenwasserstoffreste, a 0, 1, 2 oder 3, durchschnittlich 0,75 bis 1,5 und b 1, 2 oder 3, durchschnittlich 0,2 bis 2,0 bedeutet und ein Molekulargewicht von mindestens 600g/mol besitzt, zur Imprägnierung von zementgebundenen Zellulosefaserbauteilen.

2. Verwendung nach Anspruch 1, wobei a durchschnittlich 0,9 bis 1,1 und b durchschnittlich 1,0 bis 1,2 bedeutet.

3. Verwendung nach Anspruch 1 oder 2, wobei R Methyl- oder Phenylreste bedeutet und R¹ Methyl- oder Ethylreste bedeutet.

4. Verwendung nach einem der Ansprüche 1 bis 3, wobei das Alkyltrialkoxysilan (B) gleiche oder verschiedene einwertige C₁-C₁₅-Alkylreste und gleiche oder verschiedene C₁-C₆-Alkoxyreste besitzt.

5. Verwendung nach einem der Ansprüche 1 bis 4, wobei das Gewichtsverhältnis von (A) Organopolysiloxan zu (B) Alkyltrialkoxysilan 100:1 bis 1:1, insbesondere 10:1 bis 2:1 beträgt.

6. Verwendung nach einem der Ansprüche 1 bis 5, wobei der Emulgator (C) ein Polyvinylalkohol ist, der noch 8 bis 20 % Vinylacetateinheiten aufweist, mit einem Polymerisationsgrad von 500 bis 3000.

7. Verwendung nach einem der Ansprüche 1 bis 6, wobei die Emulsion Puffersubstanzen enthält, welche den pH-Wert im Bereich von 4 bis 7 stabilisieren.

8. Verwendung nach einem der Ansprüche 1 bis 7, wobei die Emulsion der hydraulischen Mischung zur Herstellung von Bauteilen vor dem Abbinden zugesetzt wird.

9. Verwendung nach einem der Ansprüche 1 bis 8, wobei die Bauteile nach dem Abbinden imprägniert werden.

## Claims

1. Use of an aqueous emulsion of (A) organopolysiloxane which is free of basic nitrogen and (B) alkyltrialkoxysilane, containing (C) an emulsifier and (D) water, wherein the organopolysiloxane (A) has the formula 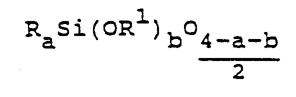 where R denotes identical or different monovalent, substituted or unsubstituted, SiC-attached C₁-C₁₈-hydrocarbon radicals, R¹ denotes identical or different monovalent C₁-C₆-hydrocarbon radicals, a is 0, 1, 2 or 3, on average from 0.75 to 1.5, and b is 1, 2 or 3, on average from 0.2 to 2.0, and has a molecular weight of at least 600 g/mol for impregnating cellulose fibre-reinforced cement components.

2. Use according to Claim 1, wherefor a is on average from 0.9 to 1.1 and b on average from 1.0 to 1.2.

3. Use according to Claim 1 or 2, wherefor R is methyl or phenyl and R¹ is methyl or ethyl.

4. Use according to any one of Claims 1 to 3, wherefor the alkyltrialkoxysilane (B) has identical or different monovalent C₁-C₁₅-alkyl radicals and identical or different C₁-C₆-alkoxy radicals.

5. Use according to any one of Claims 1 to 4, wherefor the weight ratio of (A) organopolysiloxane to (B) alkyltrialkoxysilane is from 100:1 to 1:1, in particular from 10:1 to 2:1.

6. Use according to any one of Claims 1 to 5, wherefor emulsifier (C) is a polyvinyl alcohol which still contains 8 to 20% of vinyl acetate units and has a degree of polymerisation of 500 to 3,000.

7. Use according to any one of Claims 1 to 6, wherefor the emulsion contains buffer substances which stabilise the pH within the range from 4 to 7.

8. Use according to any one of Claims 1 to 7, wherefor the emulsion is added to the hydraulic mixture for making structural components before setting.

9. Use according to any one of Claims 1 to 8, wherefor the structural components are impregnated after setting.

## Revendications

1. Utilisation, en vue d'en imprégner des éléments de construction en fibres de cellulose liées par un ciment, d'une émulsion aqueuse d'un (A) organopolysiloxane, étant exempte d'azote basique et d'un (B) alkyltrialcoxysilane, émulsions contenant un (C) émulsionnant et (D) de l'eau, l'organopoly-siloxane (A) ayant la formule 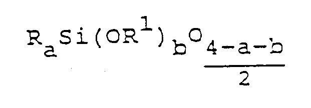 dans laquelle les radicaux R, identiques ou différents, signifient des radicaux hydrocarbonés monovalents, ayant de 1 à 18 atomes de carbone, reliés par une liaison SiC, éventuellement substitués, les radicaux R¹ identiques ou différents, signifient des radicaux hydrocarbonés monovalents en C₁-C₆, a est le nombre 0, 1, 2 ou 3, en moyenne de 0,75 à 1,5, et b le nombre 1, 2 ou 3, en moyenne de 0,2 à 2,0, et ayant une masse moléculaire au moins égale à 600 g/mol.

2. Utilisation selon la revendication 1, a étant en moyenne de 0,9 à 1,1 et b en moyenne de 1,0 à 1,2.

3. Utilisation selon la revendication 1 ou 2, R signifiant le groupe méthyle ou phényle et R¹ le groupe méthyle ou éthyle.

4. Utilisation selon l'une des revendications 1 à 3, l'alkyltrialcoxysilane (B) comportant des radicaux alkyles monovalents identiques ou différents en C₁-C₁₅ et des radicaux alcoxy identiques ou différents en C₁-C₆.

5. Utilisation selon l'une des revendications 1 à 4, le rapport pondéral de l'organopolysiloxane (A) à l'alkyl-trialcoxysilane (B) étant compris entre 100:1 et 1:1, en particulier entre 10:1 et 2:1.

6. Utilisation selon l'une des revendications 1 à 5, l'émulsionnant (C) étant un alcool polyvinylique, lequel possède encore de 8 à 20% de motifs d'acétate de vinyle, ayant un degré de polymérisation de 500 à 3000.

7. Utilisation selon l'une des revendications 1 à 6, l'émulsion contenant des matières de tamponnage, lesquelles stabilisent le pH dans une zone comprise entre 4 et 7.

8. Utilisation selon l'une des revendications 1 à 7, l'émulsion étant ajoutée au mélange hydraulique pour former les éléments de construction avant la prise.

9. Utilisation selon l'une des revendications 1 à 8, les éléments de construction étant imprégnés après prise.
